# EUROPEAN PATENT APPLICATION

(11) **EP 4 654 321 A1**
(43) Date of publication of application: **26.11.2025**
(21) Application number: 25170007.6
(22) Date of filing: 11.04.2025
(51) Int. Cl.: H01M 10/0567, H01M 10/0569

(54) **ELECTROLYTE AND BATTERY INCLUDING THE SAME**

(30) Priority: 24.05.2024 CN 202410657909
(71) Applicant: AESC Japan Ltd., Yokohama-Shi, Kanagawa 220-0012 (JP)
(72) Inventor: YU, Le, Kangqiao Town, Pudong New Area Shanghai, 201315 (CN); ZHANG, Xiaozhe, Kangqiao Town, Pudong New Area Shanghai, 201315 (CN)
(74) Representative: Becker, Eberhard

(57) **Abstract**

Disclosed are an electrolyte and a battery including the same. The electrolyte includes a solvent, a lithium salt, and an additive. The solvent is composed of a fluorinated solvent. The additive includes tetravinylsilane (TVSI). Based on a total mass of the electrolyte, a content of the TVSI is 0.01% to 1%. The fluorinated solvent in combination with a specific content of the TVSI is used in the electrolyte, so that the battery has excellent high-temperature storage capacity performance and high-temperature cycle performance when showing good performance of high-voltage resistance.

## Description

### BACKGROUND

### Technical Field

The disclosure belongs to a field of lithium ion battery technology, and relates to an electrolyte and a battery including the same.

### Description of Related Art

In recent years, the rapid development of the new energy vehicle market has driven the explosive growth in market value of the power battery market, primarily dominated by secondary alkali metal ion batteries. However, the energy density of currently commercialized secondary lithium ion batteries is approaching theoretical limit thereof. To fundamentally address the range anxiety of electric vehicle buyers, increasing the battery voltage is an intuitive and feasible method.

However, with the improvement of the battery voltage, the oxidation activity of the positive electrode material increases, and the structure is prone to damage. The electrolyte is also susceptible to decomposition under high voltage, especially at high temperatures. The side reactions of the electrolyte and the side reactions at the interface between the electrolyte and the positive and negative electrodes are intensified, causing rapid battery swelling, capacity decay, and deterioration of cycle performance.

Therefore, how to make the battery have good high-temperature performance under high voltage is an urgent technical problem to be solved in this field.

### SUMMARY

The disclosure provides an electrolyte in combination of a fluorinated solvent with a specific content of a tetravinylsilane (TVSI), so that the battery has excellent high-temperature storage performance and high-temperature cycle performance on the basis of good performance of high-voltage resistance.

The disclosure further provides a battery including the aforementioned electrolyte. Therefore, the battery has good performance of high voltage resistance, high-temperature storage performance, and high-temperature cycle performance.

In a first aspect, the disclosure provides an electrolyte, including a solvent, a lithium salt, and an additive. The solvent is composed of a fluorinated solvent. The additive includes a TVSI.

Based on a total mass of the electrolyte, a content of the TVSI is 0.01% to 1%.

In an optional embodiment, the additive further includes a 1-propene-1,3-sultone.

In an optional embodiment, based on the total mass of the electrolyte, a content of the 1-propene-1,3-sultone is 0.01% to 1%.

In an optional embodiment, a mass ratio of the TVSI to the 1-propene-1,3-sultone is (50 to 1):(1 to 2).

In an optional embodiment, the fluorinated solvent includes a fluorinated ethyl methyl carbonate (FEMC) and a fluorinated ethylene carbonate (FEC).

In an optional embodiment, a mass ratio of the FEMC to the FEC is (15 to 2):(1 to 6).

In an optional embodiment, based on the total mass of the electrolyte, a content of the lithium salt is 12% to 20%.

In an optional embodiment, the lithium salt includes a lithium hexafluorophosphate. Based on the total mass of the electrolyte, a content of the lithium hexafluorophosphate is 8% to 20%.

In a second aspect, the disclosure provides a battery including a positive electrode sheet, a negative electrode sheet, a separator, and an electrolyte. The electrolyte is the electrolyte provided in the first aspect of the disclosure.

In an optional embodiment, the positive electrode sheet includes a positive electrode active material, the positive electrode active material includes a lithium nickel manganese oxide material with a carbon coating layer, and a chemical formula of the lithium nickel manganese oxide material is LiₐNiₓMn_{y}O₄, where 0.90≤a≤1.10, 0.4≤x≤0.6, and 1.4≤y≤1.6.

Embodiments of the disclosure have at least beneficial effects as follows.

The electrolyte of the disclosure uses the fluorinated solvent in combination with a specific content of the TVSI, where the fluorinated solvent may provide a higher fluorine content in the electrolyte. The strong electron-withdrawing ability of fluorine atoms is beneficial for the electrolyte to have high oxidation stability, thereby significantly improving the high voltage resistance performance of the electrolyte. Meanwhile, the specific content of the TVSI forms a CEI film rich in silicon element on the positive electrode side. The CEI film has good thermal stability and is not easily swollen, which may reduce side reactions between the electrolyte and the positive electrode material at high temperatures and inhibit gas generation, capacity loss, and DCR increase in the battery at high temperatures, so that the battery has good high temperature storage performance and high temperature cycling performance when showing high voltage resistance.

### DESCRIPTION OF THE EMBODIMENTS

To make the purpose, technical solutions, and advantages of the disclosure clearer, the technical solutions in the embodiments of the disclosure are described clearly and completely in combination with the embodiments of the disclosure below. Obviously, the described embodiments are only a part of the embodiments of the disclosure, not all of the embodiments. Based on the embodiments of the disclosure, all other embodiments obtained by those skilled in the art without creation are within the protection scope of the disclosure.

In a first aspect, the disclosure provides an electrolyte including a solvent, a lithium salt, and an additive. The solvent is composed of a fluorinated solvent. The additive includes tetravinylsilane (TVSI).

Based on a total mass of the electrolyte, a content of the TVSI is 0.01% to 1%.

The fluorinated solvent may provide a higher fluorine content in the electrolyte. The strong electron-withdrawing ability of fluorine atoms may be beneficial for the electrolyte to have higher oxidation stability, thereby significantly improving the high voltage resistance performance of the electrolyte. However, a carbon-fluorine bond is prone to break at high temperatures. The broken fluorine atom reacts with active hydrogen in the electrolyte to form hydrofluoric acid, causing increased acidity of the electrolyte, which corrodes alkaline substances in SEI (solid electrolyte interphase) and CEI (cathode electrolyte interphase) films and leads to damage of positive and negative electrode interfaces and continuous side reactions. Therefore, gas generation, capacity loss, and direct current resistance (DCR) may increase in the battery at high temperatures. In the disclosure, a specific content of the TVSI (with a structure shown in Formula I) is added to the electrolyte. The molecular structure of the TVSI has multiple unsaturated vinyl groups, which preferentially undergo oxidative decomposition at the positive electrode side, participating in the formation of the CEI film. The formed CEI film is a silicon-rich polymer that is not easily swollen by the solvent and has good thermal stability. Side reactions between the electrolyte and the positive electrode material are reduced at high temperatures, thereby suppressing gas generation, capacity loss, and DCR increase in the battery at high temperatures. As a result, the electrolyte has good high-temperature storage performance and high-temperature cycling performance when showing high voltage resistance.

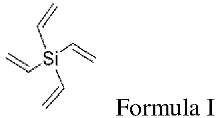

The high voltage stability of the fluorinated solvent may be superior to the high voltage stability of the carbonate solvent. However, without stable protection of the CEI film, oxidative decomposition may still occur. When the content of the TVSI is <0.01%, the formed CEI film is too thin or uneven, which causes some interfaces to be insufficiently protected. The fluorinated solvent oxidizes and decomposes, and the interface formed by the by-products is not be stable enough. During subsequent processes of cycling and high-temperature storage, further decomposition may occur, leading to continuous side reactions and degradation of performance of the battery. When the content of the TVSI is >1%, the CEI film grows excessively with a large thickness, resulting in significant deterioration of the high-temperature performance of the battery.

Exemplarily, based on the total mass of the electrolyte, the content of the TVSI may be 0.01%, 0.05%, 0.1%, 0.3%, 0.5%, 0.8%, 1.0%, 1.2%, or a range composed of any two of these values.

The disclosure does not specifically limit a type of the fluorinated solvent, which may be selected from a conventional fluorinated carbonate ester and/or fluorinated carboxylic ester in the field.

In some specific embodiments, the fluorinated carbonate ester includes, but is not limited to, one or multiple of fluorinated ethylene carbonate (FEC, CAS No.: 114435-02-8), difluorinated ethylene carbonate (DFEC, CAS No.: 311810-76-1), fluoropropylene carbonate (FPC, also known as 3-fluoropropylene carbonate, CAS No.: 127213-73-4), difluoropropylene carbonate (DFPC, also known as 3,3-difluoropropylene carbonate, CAS No.: 186098-91-9), trifluoropropylene carbonate (TFPC, also known as 3,3,3-trifluoropropylene carbonate, CAS No.: 167951-80-6), methyl 2,2,2-trifluoroethyl carbonate (FEMC, CAS No.: 156783-95-8), ethyl 2,2,2-trifluoroethyl carbonate (CAS No.: 156783-96-9), and bis(2,2,2-trifluoroethyl) carbonate (CAS No.: 1513-87-7).

In some specific implementations, the fluorinated carboxylic ester includes, but is not limited to, one or multiple of 2,2-difluoroethyl acetate (DFEA, CAS No.: 1550-44-3), 2-fluoroethyl acetate (CAS No.: 462-26-0), 2,2,2-trifluoroethyl acetate (CAS No.: 406-95-1), 2,2-difluoroethyl propionate (CAS No.: 1133129-90-4), 2,2,2-trifluoroethyl propionate (CAS No.: 82259-34-5), 2,2,2-trifluoroethyl butyrate (CAS No.: 371-27-7), and 2,2-difluoroethyl butyrate (CAS No.: 1309602-59-2).

The disclosure does not specifically limit the content of the fluorinated solvent in the electrolyte, which may refer to the conventional content of the solvent in the electrolyte.

In a preferred embodiment, the additive further includes a 1-propene-1,3-sultone (PST). A structure of the PST is shown in Formula II, which has an unsaturated carbon-carbon double bond and sulfonic acid ester structure. The unsaturated carbon-carbon double bond may participate in the oxidation reaction on the positive electrode side, synergistically forming a CEI film with better stability on the positive electrode with the TVSI. In the structure, the sulfur-containing sulfonic acid ester structure is conducive to forming a sulfur-containing SEI film with better thermal stability on the negative electrode side, effectively reducing the gas generated by the electrolyte on the negative electrode surface, and further improving the high-temperature storage performance of the battery.

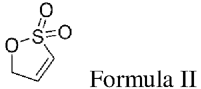

According to the research, when a content of an allyl-1,3-propane sultone is too low, it may be difficult to synergistically form a CEI film with better stability with TVSI, and it may be difficult to form a sulfur-containing SEI film with better stability on the negative electrode side. When the content of the 1-propene-1,3-sultone is too high, the formed CEI film and SEI film is too thick, which leads to an increase in the DCR of the battery. Therefore, the content that is too high or too low is detrimental to the high-temperature storage performance and high-temperature cycle performance of the battery. Preferably, based on the total mass of the electrolyte, the content of the 1-propene-1,3-sultone is 0.01% to 1%. Exemplarily, based on the total mass of the electrolyte, the content of the 1-propene-1,3-sultone is 0.01%, 0.05%, 0.1%, 0.3%, 0.5%, 0.8%, 1.0%, or any range composed of any two of these values.

Further, a mass ratio of the TVSI to the 1-propene-1,3-sultone is (50 to 1):(1 to 2). Mixing the TVSI and the 1-propene-1,3-sultone within the above mass ratio range is conducive to the synergistic formation of the better quality and thinner CEI film and SEI film, enabling the battery to have a smaller DCR, so that the battery has improved high-temperature cycle performance and high-temperature storage performance.

In a preferred embodiment, the fluorinated solvent includes a fluorinated ethyl methyl carbonate (FEMC) and a fluorinated ethylene carbonate (FEC). The FEC may decompose to form an SEI film on a surface of the negative electrode to protect an interface of the negative electrode and have strong dissolution ability for the lithium salt, wide liquid range, and good stability. However, viscosity of the FEC is relatively high, which is not conducive to the electrolyte having good fluidity and wettability. The FEMC is a linear fluorinated carbonate solvent with low viscosity, which is beneficial for the movement of lithium ions in the electrolyte, but has low solubility for the lithium salt and is not easy to form a film on interface of the negative electrode to protect the negative electrode. Using the FEMC alone is beneficial to increase the oxidation stability of the electrolyte on the positive electrode side, but the FEMC needs to be used with a large amount of additives, otherwise there is still a risk of continuous decomposition of the electrolyte. Using the FEC alone may provide a certain degree of protection for the negative electrode, but there are problems of excessive viscosity and severe decomposition on the positive electrode side. In the disclosure, the FEMC and the FEC are combined to exert a synergistic effect. After a small amount of the FEC was used to form the SEI film, due to the oxidation resistance of the FEMC, when being used as the main solvent component of the electrolyte, the FEMC may inhibit the continuous reaction of the FEC. Moreover, the addition of the additive may improve the performance of the battery.

Further, a mass ratio of the FEMC to the FEC is (15 to 2):(1 to 6). Within this mixed mass ratio range, the high-temperature storage performance and high-temperature cycle performance of the battery are more preferred.

The disclosure does not specifically limit a type of the lithium salt, which may be selected from conventional lithium salts used in the field, including but not limited to one or multiple of lithium hexafluorophosphate, lithium tetrafluoroborate, and lithium hexafluoroarsenate. Furthermore, based on the total mass of the electrolyte, a content of the lithium salt is 12% to 20%. For example, based on the total mass of the electrolyte, the content of the lithium salt is 12%, 14%, 16%, 18%, 20%, or any range formed by any two of these values.

In a preferred embodiment, the lithium salt includes a lithium hexafluorophosphate, and based on the total mass of the electrolyte, a content of the lithium hexafluorophosphate is 8% to 20%. For example, based on the total mass of the electrolyte, the content of the lithium hexafluorophosphate is 8%, 10%, 12%, 14%, 16%, 18%, 20%, or any range formed by any two of these values. Compared with other types of the lithium salt, the lithium hexafluorophosphate is less likely to cause corrosion under high voltage.

In a second aspect, the disclosure provides a battery including a positive electrode sheet, a negative electrode sheet, a separator, and an electrolyte. The electrolyte is the electrolyte provided in the first aspect of the disclosure.

Due to the aforementioned electrolyte, the battery of the disclosure may therefore has high-temperature cycling performance and high-temperature storage performance when showing high voltage resistance.

The positive electrode sheet of the disclosure includes a current collector and a positive electrode active material layer disposed on a surface of the current collector. The positive electrode active material layer is mainly composed of the positive electrode active material, and also includes conventional components such as a binder and a conductive agent.

The disclosure does not specifically limit a type of the positive electrode active material, which may be selected from conventional positive electrode active materials used in the field, including but not limited to one or multiple of lithium cobalt oxide, lithium nickel oxide, lithium manganese oxide, lithium nickel cobalt manganese oxide, lithium nickel cobalt aluminum oxide, lithium nickel manganese oxide, and lithium iron phosphate.

In a preferred embodiment, the positive electrode active material includes a lithium nickel manganese oxide material with a carbon coating layer. A chemical formula of the lithium nickel manganese oxide material is LiₐNiₓMn_{y}O₄, where 0.90≤a≤1.10, 0.4≤x≤0.6, and 1.4≤y≤1.6.

The disclosure does not limit a coating form of the carbon coating layer on a surface of an inner core of the lithium nickel manganese oxide, which may coat part of a core surface, or may form a full coating state on the surface of the inner core of the lithium nickel manganese oxide.

It may be understood that when a mass proportion of the carbon coating layer in the lithium nickel manganese oxide material is too low, it is difficult to form effective protection for the inner core, and when the mass proportion is too high, it is not beneficial for the energy density of the battery. In a preferred embodiment, a mass of the carbon coating layer accounts for 1% to 3% of the mass of the lithium nickel manganese oxide material. Here, the mass of the material of the lithium nickel manganese oxide refers to the mass of the inner core, not including the mass of the carbon coating layer.

In a specific embodiment, a carbon source of the carbon coating layer includes one or multiple of fructose, polyethylene glycol, galactose, polyvinylpyrrolidone, and tannic acid. The carbon coating layer formed from the aforementioned carbon source effectively protects the surface of the inner core while forming a large number of conductive carbon dots on the surface of the inner core, which is beneficial for improving the conductive performance of the material.

In a specific embodiment, the lithium nickel manganese oxide positive electrode material with a carbon coating layer may be prepared through the following method. The carbon source is subjected to pre-sintering treatment under a nitrogen atmosphere to obtain a material to be coated. Afterwards, the material to be coated is mixed with the lithium nickel manganese oxide material and subjected to secondary sintering treatment, thereby obtaining the lithium nickel manganese oxide positive electrode material with a carbon coating layer.

Further, a pre-sintering treatment is conducted at a temperature of 500°C to 700°C for 2h to 8h. A secondary sintering treatment is conducted at a temperature of 350°C to 500°C for 12h to 20h.

The disclosure does not specifically limit the conductive agent in the positive electrode sheet, which may be selected from conventional conductive agents used in the field, including but not limited to one or multiple of acetylene black, conductive carbon black, Ketjen black, conductive graphite, carbon nanotubes, conductive carbon fibers, and graphene.

The disclosure does not specifically limit the binder in the positive electrode sheet, which may be selected from conventional binders used in the field, including but not limited to one or multiple of polyvinylidene fluoride, polytetrafluoroethylene, sodium carboxymethyl cellulose, styrene-butadiene rubber, and polyethylene oxide.

The disclosure does not particularly limit the current collector in the positive electrode sheet, which may be selected from conventional positive electrode current collectors used in the field, such as aluminum foil.

The positive electrode sheet of the disclosure may be prepared by the conventional method in the field. For example, the positive electrode active material, the conductive agent, and the binder are dispersed in a solvent to obtain a positive electrode active material layer slurry. The slurry is then coated on a positive electrode current collector and dried to obtain the positive electrode sheet.

The negative electrode sheet of the disclosure may be selected from a conventional negative electrode sheet used in the field. The negative electrode sheet includes a current collector and a negative electrode active material layer disposed on the surface of the current collector.

The negative electrode current collector may be selected from a conventional negative electrode current collector used in the field, such as copper foil.

The negative electrode active material layer is mainly composed of the negative electrode active material, and further includes conventional components such as a binder, a thickening agent, and a conductive agent.

The disclosure does not particularly limit a type of the negative electrode active material, which may be selected from conventional negative electrode active materials used in the field, including but not limited to one or multiple of artificial graphite, natural graphite, hard carbon, soft carbon, nano silicon (Si), silicon oxide negative electrode material (SiOₓ(0<x<2)), and silicon-carbon negative electrode material.

The disclosure does not specifically limit types of the conductive agent and the binder in the negative electrode sheet. A selection range may refer to the types of the conductive agent and the binder in the positive electrode sheet, which is not repeated here.

The disclosure does not particularly limit a type of the thickener in the negative electrode sheet, which may be selected from conventional thickening agents used in the field, including but not limited to one or multiple of sodium carboxymethyl cellulose, sodium polyacrylate, or polyvinyl alcohol.

The negative electrode sheet of the disclosure may be prepared by a conventional method in the field. For example, the negative electrode active material, the conductive agent, the thickening agent, and the binder are dispersed in a solvent to form a negative electrode active slurry. Afterwards, the negative electrode active slurry is coated on a negative electrode current collector and dried to obtain the negative electrode sheet.

A function of the separator is to separate the positive and negative electrode sheets and provide a channel for lithium ion migration. The disclosure does not specifically limit a type of the separator, which may be selected from conventional separators used in the field, such as a polypropylene separator and a polyethylene separator.

The disclosure does not specifically limit the preparation method of the lithium ion battery, and may use conventional preparation methods in the field to prepare the lithium ion battery. For example, the positive electrode sheet, the separator, and the negative electrode sheet are stacked in sequence, with the separator positioned between the positive electrode sheet and the negative electrode sheet, to obtain the battery cell through stacking or winding process, and then the lithium ion battery of the disclosure may be obtained through processes such as baking, electrolyte injection, formation, and sealing.

The electrolyte and battery provided by the disclosure are further detailed described in the following through specific embodiments.

Unless otherwise specified, reagents, materials, and instruments used in the following examples are conventional reagents, conventional materials, and conventional instruments in the field, all of which may be obtained commercially. The reagents involved may also be synthesized through conventional methods in the field.

Examples 1 to 15 and comparative examples 1 to 9 of the lithium ion battery are all prepared according to the following methods.

### 1. Preparation of the electrolyte

In an argon atmosphere glove box with a water content less than 10 ppm, the lithium salt and the additive may be added to the solvent and mixed uniformly to obtain the electrolyte.

The lithium salt is the lithium hexafluorophosphate, and a mass is 13% of a total mass of the electrolyte is added therein. The specific types and contents of the solvent and the additive used in the electrolyte are listed in Table 1.

In Table 1, the content of the additive is expressed as a mass percentage based on the total mass of the electrolyte.

The mass percentage content of the solvent in the electrolyte is 100% - the mass percentage content of the lithium salt - the mass percentage content of the additive, which is not listed in Table 1.

### 2. Preparation of the positive electrode sheet

The positive electrode active material Li_{0.98}Ni_{0.45}Mn_{1.55}O₄ with a carbon-coated structure, the binder polyvinylidene fluoride, and the conductive agent Super-P are mixed according to a mass ratio of 98:1:1. N-methyl pyrrolidone is added, and the mixture is stirred under the action of a vacuum mixer until the mixture presents a uniform and transparent state to obtain a positive electrode slurry. The positive electrode slurry is uniformly coated on aluminum foil. The aluminum foil is air-dried at room temperature and then transferred to an oven for drying. Subsequently, the positive electrode sheet is obtained through cold pressing and cutting.

### 3. Preparation of the negative electrode sheet

The negative electrode active material artificial graphite, the conductive agent Super P, the thickening agent sodium carboxymethyl cellulose CMC-Na, and the binder styrene-butadiene rubber SBR may be mixed according to a mass ratio of 96:1:1:2. Deionized water is added, and the mixture is stirred under the action of a vacuum mixer to obtain a negative electrode slurry. The negative electrode slurry may be uniformly coated on a negative electrode current collector copper foil. The copper foil may be air-dried at room temperature and then transferred to an oven for drying. Afterwards, the negative electrode sheet may be obtained through cold pressing and cutting.

### 4. Assembly of the lithium ion battery

A polypropylene film with a thickness of 12µm is used as a separator. The positive electrode sheet, the separator, and the negative electrode sheet prepared as described above are stacked in sequence, with the separator positioned between the positive and negative electrode sheets to serve as an isolation layer, to obtain a stacked core. The stacked core is then placed in an aluminum-plastic film packaging bag and transferred to a vacuum oven for drying at 120°C. After being injected 3g of the prepared electrolyte as described above, the bag is sealed, and the electrolyte formation process is conducted. Finally, a soft-pack lithium ion battery with a capacity of 1Ah is prepared.

**Table 1**

| Group | Solvent | Additive |
|---|---|---|
| Example 1 | FEMC+FEC (mass ratio of 5:3) | 0.01%TVSI |
| Example 2 | FEMC+FEC (mass ratio of 5:3) | 0.5%TVSI |
| Example 3 | FEMC+FEC (mass ratio of 5:3) | 1%TVSI |
| Example 4 | FEMC+FEC (mass ratio of 5:3) | 0.5%TVSI+0.01 %PST |
| Example 5 | FEMC+FEC (mass ratio of 5:3) | 0.5%TVSI +0.5%PST |
| Example 6 | FEMC+FEC (mass ratio of 5:3) | 0.5%TVSI +1%PST |
| Example 7 | FEMC+FEC (mass ratio of 6:2) | 0.5%TVSI +0.5%PST |
| Example 8 | FEMC+FEC (mass ratio of 7:1) | 0.5%TVSI +0.5%PST |
| Example 9 | FEMC+FEC (mass ratio of 2:6) | 0.5%TVSI +0.5%PST |
| Example 10 | FEMC+FEC (mass ratio of 5:3) | 0.5%TVSI+0.008%PST |
| Example 11 | FEMC+FEC (mass ratio of 5:3) | 0.5%TVSI+1.2%PST |
| Example 12 | FEMC | 0.5%TVSI +0.5%PST |
| Example 13 | FEC | 0.5%TVSI +0.5%PST |
| Example 14 | FEMC+FEC (mass ratio of 7.5:0.5) | 0.5%TVSI +0.5%PST |
| Example 15 | FEMC+FEC (mass ratio of 6:2) | 0.5%TVSI +0.5%PST |
| Comparative Example 1 | FEMC+FEC (mass ratio of 5:3) | / |
| Comparative Example 2 | FEMC+FEC (mass ratio of 5:3) | 0.5%VC |
| Comparative Example 3 | FEMC+FEC (mass ratio of 5:3) | 0.5%VC+0.5%DTD |
| Comparative Example 4 | FEMC+FEC (mass ratio of 5:3) | 0.008%TVSI |
| Comparative Example 5 | FEMC+FEC (mass ratio of 5:3) | 1.2%TVSI |
| Comparative Example 6 | DMC | 0.5%TVSI +0.5%PST |
| Comparative Example 7 | DEC | 0.5%TVSI +0.5%PST |
| Comparative Example 8 | FEMC+DMC (mass ratio of 2:6) | 0.5%TVSI +0.5%PST |
| Comparative Example 9 | FEC+DEC (mass ratio of 2:6) | 0.5%TVSI +0.5%PST |

In Table 1, DMC represents dimethyl carbonate, DEC represents diethyl carbonate, DTD represents ethylene sulfate, and VC represents vinylene carbonate.

### Testing example

The following performance tests are conducted on the lithium ion batteries of the above examples and comparative examples.

### (1) DCR test of the lithium ion battery at 25°C

The battery is placed in a constant temperature chamber, and the temperature in the chamber is adjusted to 25°C. The battery is subjected to three charge-discharge cycles using a 0.33C current, and the discharge capacity of the last cycle is marked as C0. At the specified temperature (25°C), when the battery is discharged to 50% SOC (State of Charge, reflecting the remaining capacity of the battery) with a 1 C0 current, the current is increased to 4 C0 and maintained for 30 s. The difference between the updated stable voltage and the original platform voltage is detected, and a ratio of the value to a value of the 4 C0 current is the DCR of the battery. A result of the DCR test conducted after the first full charge of the battery is the initial DCR of the battery.

### (2) High-temperature storage capacity retention rate of the lithium ion battery at 60°C

At room temperature, the battery is discharged at a rate of 0.3C to the cut-off voltage, and the discharged capacity is marked as the initial discharge capacity C0. Then, the battery is fully charged and stored in a constant temperature chamber at 60°C for 15 days. After storage, the battery is taken out and cooled to room temperature. Afterwards, the battery is discharged at a 0.3C rate to the cut-off voltage, and the discharge capacity is marked as C1. A high-temperature storage capacity retention rate of the battery at 60°C is calculated as C1/C0×100%.

### (3) High-temperature cycle test at 45°C

The battery is subjected to cyclic charge and discharge at 45°C, where the charge and discharge cut-off voltage range is 3.4V to 4.85V, the charge and discharge rate is 1C/1C, and the discharge capacity of each cycle is recorded. The test is terminated when the capacity of the battery remains at 80% SOC, and the actual achieved number of cycles is recorded.

Results of the aforementioned test are shown in Table 2.

**Table 2**

| Group | DCR at 25°C (mΩ) | High-temperature storage capacity retention rate (%) at 60°C | High-temperature cycle number (80% SOC) at 45°C |
|---|---|---|---|
| Example 1 | 121 | 72 | 379 |
| Example 2 | 120 | 73 | 381 |
| Example 3 | 109 | 79 | 407 |
| Example 4 | 100 | 82 | 439 |
| Example 5 | 71 | 95 | 491 |
| Example 6 | 102 | 82 | 453 |
| Example 7 | 124 | 72 | 367 |
| Example 8 | 133 | 68 | 355 |
| Example 9 | 149 | 66 | 317 |
| Example 10 | 81 | 77 | 219 |
| Example 11 | 109 | 82 | 489 |
| Example 12 | 179 | 69 | 288 |
| Example 13 | 182 | 51 | 339 |
| Example 14 | 129 | 89 | 291 |
| Example 15 | 92 | 71 | 451 |
| Comparative Example 1 | 161 | 60 | 213 |
| Comparative Example 2 | 156 | 63 | 214 |
| Comparative Example 3 | 151 | 66 | 222 |
| Comparative Example 4 | 142 | 76 | 362 |
| Comparative Example 5 | 190 | 87 | 107 |
| Comparative Example 6 | Dead | Dead | Dead |
| Comparative Example 7 | 291 | 32 | 87 |
| Comparative Example 8 | 301 | 12 | 92 |
| Comparative Example 9 | 420 | 61 | 129 |

In Table 2, "Dead" indicates that the battery is unable to discharge.

From the data in Table 2, conclusions may be drawn as follows.
1) By comparing Examples 1 to 3 and comparative examples 1, 4, and 5, it may be known that compared to not adding the TVSI, when the content of the TVSI in the electrolyte is in a range of 0.01% to 1%, the DCR of the battery at 25°C is significantly reduced, and the high-temperature storage capacity retention rate at 60°C and the high-temperature cycle number at 45°C are also significantly improved. When the content of the TVSI is 0.5%, the comprehensive performance of the battery is optimal. However, when the content of the TVSI is lower than 0.01%, it is difficult to form a complete SEI film on the interface of the negative electrode to provide comprehensive protection, thereby causing deterioration in performance of the DCR at 25°C, the high-temperature storage capacity retention rate at 60°C, and the high-temperature cycle number at 45°C of the battery. When the content of the TVSI exceeds 1%, the formed SEI film becomes too thick, causing a sharp increase in the internal resistance of the battery, and significantly worsening the high-temperature storage performance and cycle performance.
2) By comparing Examples 2, 4 to 6, and 10 to 11, it may be known that when the TVSI and the PST are used in combination, and a content of the PST is controlled to be 0.01% to 1%, the DCR of the battery at 25°C may be further reduced, and the high-temperature storage capacity retention rate at 60°C and the high-temperature cycle number at 45°C is further improved. The reason lies in that the PST may also participate in film-forming reaction of the negative electrode, which helps to further assist in generating a stable SEI film. However, excessive added content of the PST may cause the thickness of the SEI film to grow excessively, leading to an increase in the DCR of the battery and deterioration of high-temperature storage capacity performance and cycle performance.
3) By comparing Examples 5, 7 to 9, and 12 to 15, it may be known that compared to using the FEMC or the FEC alone as a solvent, using a solvent obtained by mixing the FEMC and the FEC in a mass ratio range of (15 to 2):(1 to 6) may significantly reduce the DCR of the battery at 25°C, so that the battery has good high-temperature storage capacity performance at 60°C and high-temperature cycle performance at 45°C. When a mass ratio of the FEMC to the FEC is 4:3, the battery exhibits the most excellent performance in all aspects.
4) From comparative examples 2 and 3, it may be seen that when a conventional VC and DTD are used as additives in the electrolyte, the battery has a larger DCR at 25°C, and the high-temperature storage capacity retention rate at 60°C and the high-temperature cycle performance at 45°C are also poor.
5) From comparative examples 6 to 9, it may be seen that when DMC is used alone, electrolyte oxidation occurs during the formation stage, causing the battery to fail to cycle normally. When only a DEC is used as a solvent, or when a DMC or DEC is mixed with the solvent of fluorinated carbonate ester, the electrolyte may also have difficulty withstanding high voltage, with poor oxidation stability, and exhibiting extremely high initial impedance, so that the high-temperature storage capacity performance at 60°C and high-temperature cycle performance at 45°C of the battery is poor.

## Claims

1. An electrolyte, comprising a solvent, a lithium salt, and an additive, wherein the solvent is composed of a fluorinated solvent, and the additive includes tetravinylsilane; and
based on a total mass of the electrolyte, a content of the tetravinylsilane is 0.01% to 1%.

2. The electrolyte according to claim 1, wherein the additive further comprises 1-propene-1,3-sultone.

3. The electrolyte according to claim 2, wherein based on the total mass of the electrolyte, a content of the 1-propene-1,3-sultone is 0.01% to 1%.

4. The electrolyte according to claim 2 or 3, wherein a mass ratio of the tetravinylsilane to the 1-propene-1,3-sultone is (50 to 1):(1 to 2).

5. The electrolyte according to claim 1, wherein the fluorinated solvent comprises a fluorinated ethyl methyl carbonate and a fluorinated ethylene carbonate.

6. The electrolyte according to claim 5, wherein a mass ratio of the fluorinated ethyl methyl carbonate to the fluorinated ethylene carbonate is (15 to 2):(1 to 6).

7. The electrolyte according to claim 1, wherein based on the total mass of the electrolyte, a content of the lithium salt is 12% to 20%.

8. The electrolyte according to claim 7, wherein the lithium salt comprises a lithium hexafluorophosphate; and
based on the total mass of the electrolyte, a content of the lithium hexafluorophosphate is 8% to 20%.

9. A battery, comprising a positive electrode sheet, a negative electrode sheet, a separator, and an electrolyte, wherein the electrolyte is the electrolyte according to any one of claims 1 to 8.

10. The battery according to claim 9, wherein the positive electrode sheet comprises a positive electrode active material, the positive electrode active material comprises a lithium nickel manganese oxide material with a carbon coating layer, a chemical formula of the lithium nickel manganese oxide material is LiₐNiₓMn_{y}O₄, wherein 0.90≤a≤1.10, 0.4≤x≤0.6, and 1.4≤y≤1.6.
